# EUROPÄISCHE PATENTSCHRIFT

(11) **EP 3 552 938 B1**
(45) Veröffentlichungstag und Bekanntmachung des Hinweises auf die Patenterteilung: **24.02.2021**
(21) Anmeldenummer: 19167810.1
(22) Anmeldetag: 08.04.2019
(51) Int. Cl.: B62K 19/32, B62J 11/13

(54) **GABEL-RAHMEN-EINHEIT**
FORK-FRAME UNIT
UNITÉ DE CADRE ET DE FOURCHE

(30) Priorität: 09.04.2018 DE 202018101912 U
(43) Veröffentlichungstag der Anmeldung: 16.10.2019
(73) Patentinhaber: ZEG Zweirad-Einkaufs-Genossenschaft eG, 50739 Köln (DE)
(72) Erfinder: Gehring, Hendrik, 51429 Bergisch Gladbach (DE)
(74) Vertreter: Hennicke, Ernst Rüdiger

(56) Entgegenhaltungen:
- CA-A1- 2 846 889
- DE-U1-202017 004 993
- US-A1- 2014 375 017
- US-B1- 9 174 695
- US-B2- 9 701 293

## Beschreibung

Die Erfindung betrifft eine Gabel-Rahmen-Einheit für ein Zwei- oder Dreirad, mit einem Fahrzeugrahmen mit einem an mindestens einem Rahmenrohr angeschlossenen Steuerrohr und mit einer Fahrzeuggabel, die einen Gabelschaft aufweist, der in dem Steuerrohr mittels eines Steuersatzes zentriert und drehbar gelagert aufgenommen ist, wobei der Steuersatz mindestens ein im Steuerrohr angeordnetes Steuerlager und mindestens einen mit dem Steuerlager zusammenwirkenden, auf dem Gabelschaft angeordneten Zentrierring aufweist, der mindestens einen Durchlass für mindestens ein von außen in das Innere des Fahrzeugrahmens verlegtes, flexibles Steuermittel aufweist.

Steuermittel wie beispielsweise elektrische Kabelverbindungen oder Brems- und Schaltungszüge, die in Bowdenzughüllen längsbewegblich aufgenommen sind, führen bei Fahrrädern und insbesondere auch bei Rädern mit elektrischem Hilfsmotor (Pedelec) vom Fahrzeuglenker zu verschiedenen Fahrzeugkomponenten wie Schaltwerken, Umwerfern, Bremsen, dem gegebenenfalls vorhandenen elektrischen Hilfsantrieb und dessen im Fahrzeugrahmen verbauten Akku. Man bemüht sich seit einiger Zeit, diese Steuermittel, die klassischerweise außen am Fahrzeugrahmen entlanggeführt waren, in dessen Inneres zu verlegen, um sie vor Schmutz und Feuchtigkeit zu schützen. Zu diesem Zweck hat man in der Vergangenheit an geeigneten Stellen Öffnungen in den Rahmenrohren vorgesehen, in die die vom Lenker ausgehenden, dort zunächst noch freiliegenden Steuermittel ins Rahmeninnere eingeführt wurden, um an anderer Stelle in der Nähe der vom jeweiligen Steuermittel zu betätigenden Fahrzeugkomponenten wieder aus dem Rahmeninneren durch eine entsprechende Öffnung herausgeführt zu werden. Diese Lösung führt zwar schon zu einem deutlich aufgeräumteren Erscheinungsbild und schützt die Steuermittel in dem Bereich, in dem diese im Rahmeninneren liegen. Gleichwohl laufen die Steuermittel dabei doch noch über eine nicht unerhebliche Länge außerhalb des Rahmens, denn zwischen den am Lenker oder dem Fahrzeugvorbau angebrachten Fahrzeugkomponenten, an denen die Steuermittel angeschlossen sind, beispielsweise Bremshebel, Schalthebel, elektronische Komponenten wie Fahrzeugcomputer und dergleichen, und den für die Steuermittel vorgesehenen Öffnungen in den Fahrzeugrahmen besteht ein verhältnismäßig großer Abstand, der überbrückt werden muss. Insbesondere für elektrische Leitungen, die von einem Fahrzeugcomputer oder von elektrischen Schaltern am Lenker zu dem Motor und/oder dem Akku eines Fahrrads mit elektrischem Hilfsantrieb geführt werden müssen, strebt man an, diese möglichst weitestgehend ins Innere des Fahrzeugrahmens zu legen, um sie vor Feuchtigkeit zu schützen.

Das Dokument zum Stand der Technik US 9 701 293 B2 offenbart die Präambel von Anspruch 1.

Es ist zu diesem Zweck vorgeschlagen worden, jedenfalls die Steuermittel, die elektrische Leitungen zwischen Elektromotor, Akku und deren Anzeige- und Betätigungsorgan am Lenker zum Gegenstand haben, bereits unmittelbar am Lenkervorbau in das Rahmeninnere einzuführen, indem das Steuermittel durch einen am oberen Zentrierring (Zentrierkonus) des Steuersatzes vorgesehenen Durchlass außen am Gabelschaft entlang in das Steuerrohr des Fahrzeugrahmens eintritt und von dort in das am Steuerrohr angeschweißte, meist untere Rahmenrohr des Fahrzeugrahmens geführt wird ("Total Integration Concept" der Firma Thömus Bikes). Das bekannte Design sorgt für eine aufgeräumt wirkende Kabelführung, birgt aber die Gefahr, dass die durch den Zentrierring ins Rahmeninnere geführten Steuermittel infolge der zwischen dem Steuerrohr und dem Gabelschaft bei Lenkeinschlägen auftretenden Relativbewegungen am Außenumfang des Gabelschafts oder innen am Steuerrohr scheuern und hierdurch beschädigt werden. Aufgabe der Erfindung ist es, das Steuermittel gegen solche Beschädigungen zu schützen.

Gelöst wird diese Aufgabe durch mindestens eine im Inneren des Steuerrohrs zwischen diesem und dem Gabelschaft angeordnete Schutzstulpe für das Steuermittel.

Eine derartige Schutzstulpe verhindert den unmittelbaren Kontakt zwischen dem Steuermittel, also insbesondere dem von außen durch den Zentrierring in das Rahmeninnere in den Zwischenraum zwischen Gabelschaft und Steuerrohr eingeführten elektrischen Leitung mit der Außenseite des Gabelschafts und/oder der Innenseite des Steuerrohrs. Dabei kann die Schutzstulpe bevorzugt zwischen dem Steuermittel und dem Gabelschaft diesen umgebend angeordnet sein, ebenso ist es möglich, dass die Schutzstulpe zwischen dem Steuermittel und dem Steuerrohr, dieses innen wenigstens auf einem Teil seiner Länge umfangsseitig abschirmend angeordnet ist. In besonders vorteilhafter Ausgestaltung der Erfindung ist es auch möglich, dass zwei im Wesentlichen konzentrisch zueinander angeordnete Schutzstulpen vorgesehen sind, zwischen denen das mindestens eine Steuermittel im Inneren des Steuerrohrs verläuft. Bei dieser Ausführungsform ist das Steuermittel dann sowohl nach innen gegenüber dem im Steuerrohr drehbar aufgenommenen Gabelschaft als auch nach außen gegenüber der Innenwandung des Steuerrohrs geschützt.

Die Schutzstulpe kann wenigstens in Umfangsrichtung verformbar sein und vorzugsweise zumindest teilweise aus einem plastisch verformbaren Material bestehen, insbesondere aus Kunststoff oder einem Elastomerwerkstoff. Als besonders vorteilhaft hat es sich erwiesen, wenn die Schutzstulpe aus einem Gewebe oder einem Gewirk besteht, das gitter- oder netzartig zwischen dem Gabelschaft und dem Steuermittel bzw. zwischen diesem und dem Steuerrohr angeordnet ist. Ein derartiges Gewebe oder Gewirk lässt sich in seiner Umfangsrichtung mit nur sehr geringem Kraftaufwand verformen (verdrehen), insbesondere wenn die in Längsrichtung parallel zur Steuerachse verlaufenden Fäden oder Stäbe des Gewebes oder Gewirks mit den in Umfangsrichtung hierzu verlaufenden Lagen keine feste Verbindung haben, sondern nur miteinander verflochten sind. Somit bleibt ein wie auch immer gearteter Einfluss der Schutzstulpe(n) auf die vom Fahrer des Fahrzeugs auszuübenden Lenkkräfte vernachlässigbar gering.

In vorteilhafter Weiterbildung der Erfindung kann vorgesehen sein, dass die Schutzstulpe an seinem einen, insbesondere oberen Ende fest an dem Zentrierring angeschlossen ist. Sie bildet dann mit dem Zentrierring ein integrales Bauteil, was die Montage im Inneren des Steuerrohrs erheblich erleichtern kann. Als besonders vorteilhaft hat es sich bei dieser Ausführungsform erwiesen, wenn die Schutzstulpe aus Kunststoff besteht und fest an dem Zentrierring angespritzt ist.

Um den Schutz des Steuermittels im Rahmeninneren auch im Bereich des Übergangs zwischen dem Steuerrohr und dem Rahmenrohr zu erhöhen, ist es vorteilhaft, wenn die zwischen dem Steuerrohr und dem Steuermittel angeordnete Schutzstulpe mit einem in das Innere des Rahmenrohrs ragenden Fortsatz versehen ist, der somit in dem mitunter scharfe Kanten aufweisenden Übergangsbereich zwischen Rahmenrohr und Steuerrohr diesen auszukleiden und einen direkten Kontakt zwischen dem Steuermittel und den scharfen Kanten des Übergangsbereichs zu verhindern vermag.

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert ist. Es zeigt:
- **Fig. 1**: einen Teil einer erfindungsgemäßen Gabel-Rahmen-Einheit im Schnitt;

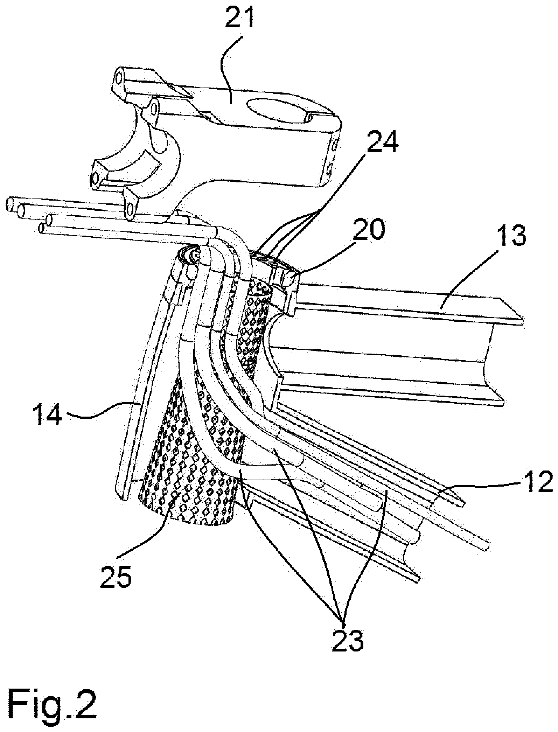

- **Fig. 2**: eine detailliertere Darstellung einer Einzelheit der Einheit nach Fig. 1 in teilweise auseinandergezogener und ausgebrochen dargestellter, perspektivischer Darstellung;

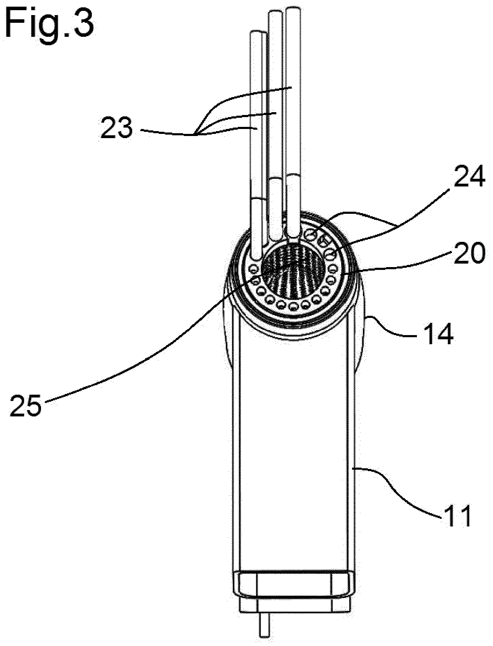

- **Fig. 3**: eine Draufsicht auf das Steuerrohr der erfindungsgemäßen Einheit mit eingebautem Steuersatz und durch dessen Zentrierring verlegten Steuermitteln; und
- **Fig. 4**: einen Teil des Steuersatzes für die erfindungsgemäße Einheit und die an dessen Zentrierring angeformte Schutzstulpe in perspektivischer, auseinandergezogener Darstellung.

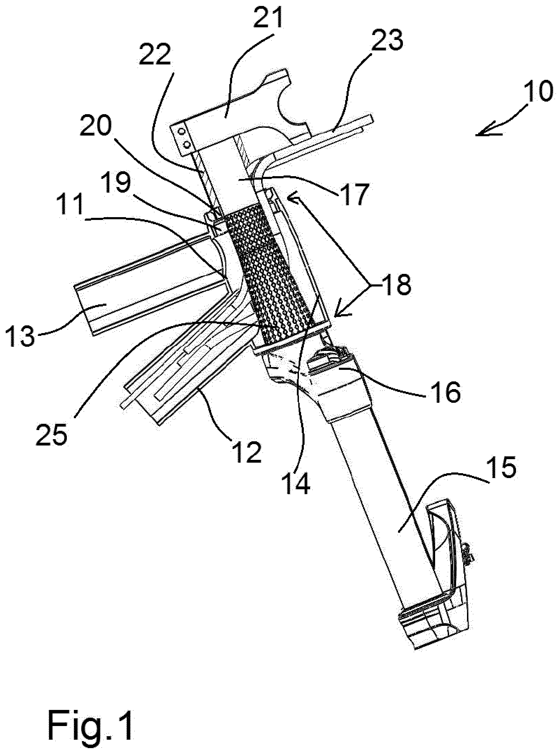

In Fig. 1 bezeichnet 10 eine erfindungsgemäße Gabel-Rahmen-Einheit für ein mit einem elektrischen Hilfsmotor (nicht dargestellt) versehenes Fahrrad, ein sogenanntes Pedelec, bei dem die Tretbewegung des Fahrers oder der Fahrerin von einem Elektromotor unterstützt wird, der seine elektrische Energie von einem am Fahrradrahmen oder dessen Gepäckträger befestigten Akku bezieht.

Die Gabel-Rahmen-Einheit 10 besteht im Wesentlichen aus einem Fahrzeugrahmen 11 mit einem unteren Rahmenrohr 12 und einem oberen Rahmenrohr 13, an deren jeweils vorderen Enden in bekannter Weise ein Steuerrohr 14 zur Aufnahme einer Fahrzeuggabel 15 angeordnet ist. Die Fahrzeuggabel ist, wie generell bei Fahrrädern oder ähnlichen zwei- oder dreirädrigen Fahrzeugen bekannt, mit ihrem nach oben von der Gabelbrücke 16 aufragenden Gabelschaft 17 von unten in das Steuerrohr 14 eingesteckt, wobei sie mittels eines Steuersatzes 18 zentriert und im Steuerrohr drehbar gelagert aufgenommen wird. Hierzu hat der Steuersatz in bekannter Weise ein erstes, unten am Steuerrohr aufgenommenes Steuerlager (nicht im Detail dargestellt) sowie ein zweites, oberes Steuerlager 19, das am oberen Ende in dem Steuerrohr 14 aufgenommen ist und in das ein konischer Zentrierring 20, der von oben auf den Gabelschaft 17 aufgesteckt ist, einfasst, so dass die Fahrzeuggabel 15 konzentrisch zur Achse des Steuerrohrs in diesem gelagert ist. Ein Herausfallen der Gabel 15 nach unten wird durch einen oben am Gabelschaft 17 angeklemmten Vorbau 21 und ein Distanzstück 22 verhindert, das sich einerseits an der Unterseite des Vorbaus abstützt und andererseits den konischen Zentrierring 20 fest in das obere Steuerlager 19 drückt und hierdurch die Innenringe der beiden Steuerlager gegeneinander anstellt. Es handelt sich bei dem dargestellten Ausführungsbeispiel also um eine im Fahrradbereich seit vielen Jahren bekannte "Aheadset"-Anordnung zur Lagerung und Befestigung der Gabel am Steuerrohr.

Wie man in der Zeichnung erkennt, sind bei der Einheit 10 mehrere flexible Steuermittel, nämlich elektrische Kabel 23, die zwischen dem Antriebs-Hilfsmotor und dessen Akku (beide nicht dargestellt) und dem ebenfalls nicht gezeigten Lenker des Fahrzeugs geführt sind, der an dem Vorbau 21 befestigt ist, vorgesehen. Dabei verlaufen die Kabel 23 im Inneren des Rahmens durch das untere Rahmenrohr 12, an dessen vorderen Ende sie in das Steuerrohr 14 in den Zwischenraum zwischen diesem und dem im Steuerrohr aufgenommenen Gabelschaft 17 eintreten und durch den Zentrierring 20 nach oben aus dem Steuerrohr 14 herausgeführt sind. Hierzu ist der Zentrierring 20 mit mehreren Durchlässen 24 in Form von über seinen Umfang verteilt angeordneten Bohrungen versehen, durch die die Kabel 23 gesteckt sind, so dass sie ordentlich nebeneinander liegend und ohne einander zu überkreuzen geführt sind.

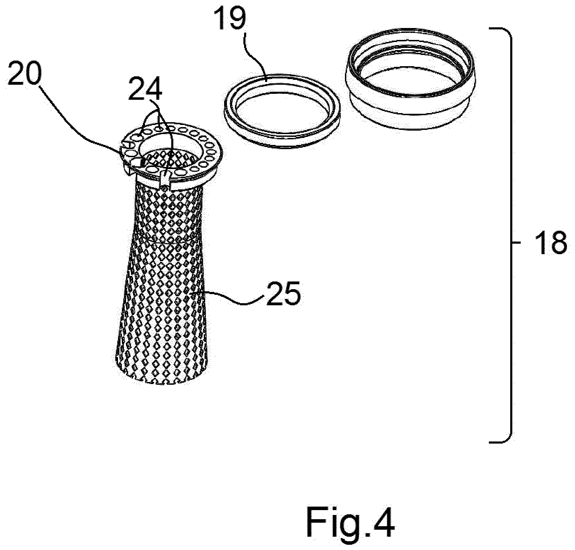

Um einen unmittelbaren Kontakt zwischen den Steuermitteln 23 und dem Gabelschaft 17 im Inneren des Steuerrohrs zu vermeiden, ist eine sich über die gesamte im Inneren des Steuerrohrs liegende Höhe des Gabelschafts sich erstreckende Schutzstulpe 25 vorgesehen, die aus einem elastischen Kunststoffmaterial besteht, das wenigstens in Umfangsrichtung elastisch verformbar ist. An die Schutzstulpe 25 können sich die Kabel 23 anlegen, wenn die Gabel im Steuerrohr beim Lenken des Fahrzeugs verdreht wird, ohne dass die Gefahr besteht, dass sie hierbei aufscheuern oder sonstwie beschädigt werden. Bei dem dargestellten, bevorzugten Ausführungsbeispiel besteht die Schutzstulpe 25 aus einem in sich flexiblen Gewebe oder einem Gewirk, das netzartig über den Gabelschaft 17 gestülpt ist. Die Anordnung ist dabei so getroffen, dass die etwa vertikal parallel zur Achse des Gabelschafts 17 und des diese umgebenden Steuerrohrs 14 verlaufenden Fäden oder Stege dieses Gewirks unmittelbar an dem Zentrierring 20 angeformt, beispielsweise angespritzt sind, so dass die Schutzstulpe 25 mit dem Zentrierring 20 ein einheitliches Bauteil (Fig. 4) bildet.

Die erfindungsgemäße Anordnung stellt zuverlässig sicher, dass die von oben durch den Zentrierring 20 ins Innere des Fahrzeugrahmens in den Zwischenraum zwischen der Innenwand des Steuerrohrs 14 und der Außenseite des Gabelschafts 17 geführten Leitungen bzw. Kabel 23 durch das Drehen der Gabel relativ zum Rahmen nicht beschädigt werden. Es ist möglich, zusätzlich oder alternativ zu der einen Schutzstulpe 25, die die Kabel 23 nach innen zum Gabelschaft hin unterlegt, eine äußere Schutzstulpe zwischen dem Steuerrohr 14 und den Steuermitteln 23 vorzusehen, so dass diese (auch) keinen direkten Kontakt mit der Innenseite des Steuerrohrs 14 haben können. Eine derartige, äußere Schutzstulpe kann mit einem in das untere Rahmenrohr 12 ragenden Fortsatz versehen sein, so dass auch im Übergang zwischen Steuerrohr 14 und Rahmenrohr 12 kein unmittelbarer Kontakt zwischen dem Fahrzeugrahmen und den durch diesen geführten Steuermitteln entstehen kann, sondern diese auch hier zuverlässig gegen Beschädigungen gesichert sind.

## Patentansprüche

1. Gabel-Rahmen-Einheit für ein Zwei- oder Dreirad, mit einem Fahrzeugrahmen (11) mit einem an mindestens einem Rahmenrohr (12) angeschlossenen Steuerrohr (14) und mit einer Fahrzeuggabel (15), die einen Gabelschaft (17) aufweist, der in dem Steuerrohr (14) mittels eines Steuersatzes (18) zentriert und drehbar gelagert aufgenommen ist, wobei der Steuersatz mindestens ein im Steuerrohr (14) angeordnetes Steuerlager (19) und mindestens einen mit dem Steuerlager (19) zusammenwirkenden, auf dem Gabelschaft angeordneten Zentrierring (20) aufweist, der mindestens einen Durchlass (24) für mindestens ein von außen in das Innere des Fahrzeugrahmens (11) verlegtes, flexibles Steuermittel (23) aufweist, **gekennzeichnet durch** mindestens eine im Inneren des Steuerrohrs (14) zwischen diesem und dem Gabelschaft (17) angeordnete Schutzstulpe (25) für das Steuermittel (23) .

2. Gabel-Rahmen-Einheit nach Anspruch 1, **dadurch gekennzeichnet, dass** die Schutzstulpe (25) zwischen dem Steuermittel (23) und dem Gabelschaft (17) diesen umgebend angeordnet ist.

3. Gabel-Rahmen-Einheit nach Anspruch 1, **dadurch gekennzeichnet, dass** die Schutzstulpe (25) zwischen dem Steuermittel (23) und dem Steuerrohr (14), dieses innen wenigstens auf einem Teil seiner Länge umfangsseitig abschirmend angeordnet ist.

4. Gabel-Rahmen-Einheit nach einem der Ansprüche 1 bis 3, **dadurch gekennzeichnet, dass** zwei im Wesentlichen konzentrisch zueinander angeordnete Schutzstulpen (25) vorgesehen sind, zwischen denen das mindestens eine Steuermittel (23) im Inneren des Steuerrohrs (14) verläuft.

5. Gabel-Rahmen-Einheit nach einem der Ansprüche 1 bis 4, **dadurch gekennzeichnet, dass** die mindestens eine Schutzstulpe wenigstens in Umfangsrichtung verformbar ist und vorzugsweise zumindest teilweise aus einem elastisch verformbaren Material, insbesondere aus Kunststoff oder einem Elastomerwerkstoff besteht.

6. Gabel-Rahmen-Einheit nach einem der Ansprüche 1 bis 5, **dadurch gekennzeichnet, dass** die mindestens eine Schutzstulpe (25) aus einem Gewebe oder einem Gewirk besteht, das gitter- oder netzartig zwischen dem Gabelschaft (17) und dem Steuermittel (23) bzw. zwischen diesem und dem Steuerrohr (14) angeordnet ist.

7. Gabel-Rahmen-Einheit nach einem der Ansprüche 1 bis 6, **dadurch gekennzeichnet, dass** die mindestens eine Schutzstulpe (25) an seinem einen, insbesondere oberen Ende fest an dem Zentrierring (20) angeschlossen ist.

8. Gabel-Rahmen-Einheit nach Anspruch 7, **dadurch gekennzeichnet,** die mindestens eine Schutzstulpe (25) aus Kunststoff besteht und fest an dem Zentrierring (20) angespritzt ist.

9. Gabel-Rahmen-Einheit nach einem der Ansprüche 1 oder 3 bis 8, **dadurch gekennzeichnet, dass** die zwischen dem Steuerrohr (14) und dem Steuermittel (23) angeordnete Schutzstulpe mit einem in das Innere des Rahmenrohres (12) ragenden Fortsatz versehen ist.

## Claims

1. Fork-frame unit for a two or three wheeled vehicle, having a vehicle frame (11) with a head tube (14) connected to at least one frame tube (12) and having a vehicle fork (15), which has a fork stem (17), which is centred and pivotably mounted in the head tube (14) by means of a headset (18), wherein the headset has at least one steering bearing (19) arranged in the head tube (14) and at least one centering ring (20) arranged on the fork stem interfacing with the steering bearing (19), which has at least one aperture (24) for at least one flexible control means (23) routed from the outside to the inside of the vehicle frame (11), **characterised by** at least one protective sleeve (25) for the control means (23) arranged inside the head tube (14) between the latter and the fork stem (17).

2. Fork-frame unit according to claim 1, **characterised in that** the protective sleeve (25) is arranged between the control means (23) and the fork stem (17) surrounding the latter.

3. Fork-frame unit according to claim 1, **characterised in that** the protective sleeve (25) is arranged between the control means and the head tube (14), circumferentially internally shielding the latter at least over part of its length.

4. Fork-frame unit according to any of claims 1 to 3, **characterised in that** two substantially concentrically arranged protective sleeves (25) are provided, between which the at least one control means (23) is routed inside the head tube (14).

5. Fork-frame unit according to any of claims 1 to 4, **characterised in that** the at least one protective sleeve is deformable at least circumferentially and preferably consists, at least partially, of an elastically deformable material, in particular of plastic or an elastomer material.

6. Fork-frame unit according to any of claims 1 to 5, **characterised in that** the at least one protective sleeve consists of a woven fabric or a knitted fabric, which is arranged in a mesh or grid like manner between the fork stem (17) and the control means (23) or between the latter and the head tube (14).

7. Fork-frame unit according to any of claims 1 to 6, **characterised in that** the at least one protective sleeve (25) is permanently connected at its one, in particular upper end, to the centring ring (20).

8. Fork-frame unit according to claim 7, **characterised in that** the at least one protective sleeve (25) consists of plastic and is permanently moulded to the centring ring (20).

9. Fork-frame unit according to any of claims 1 or 3 to 8, **characterised in that** the protective sleeve arranged between the head tube (14) and the control means (23) is provided with an extension projecting into the inside of the frame tube (12).

## Revendications

1. Unité de cadre et de fourche pour un véhicule à deux ou trois roues, avec un cadre de véhicule (11) avec un tube de commande (14) raccordé à au moins un tube de cadre (12) et avec une fourche de véhicule (15) qui présente une tige de fourche (17) qui est reçue en étant logée de manière centrée et rotative dans le tube de commande (14) au moyen d'un ensemble de guidon (18), dans laquelle l'ensemble de guidon présente au moins un palier de commande (19) agencé dans le tube de commande (14) et au moins un anneau de centrage (20) agencé sur la tige de fourche, coagissant avec le palier de commande (19) qui présente au moins un passage (24) pour au moins un moyen de commande (23) flexible, posé de l'extérieur à l'intérieur du cadre de véhicule (11), **caractérisée par** au moins un fourreau de protection (25) agencé à l'intérieur du tube de commande (14) entre celui-ci et la tige de fourche (17) pour le moyen de commande (23).

2. Unité de cadre et de fourche selon la revendication 1, **caractérisée en ce que** le fourreau de protection (25) est agencé entre le moyen de commande (23) et la tige de fourche (17) en entourant celui-ci.

3. Unité de cadre et de fourche selon la revendication 1, **caractérisée en ce que** le fourreau de protection (25) est agencé entre le moyen de commande (23) et le tube de commande (14), blindant celui-ci à l'intérieur au moins sur une partie de sa longueur côté périphérie.

4. Unité de cadre et de fourche selon l'une quelconque des revendications 1 à 3, **caractérisée en ce que** deux fourreaux de protection (25) agencés sensiblement concentriquement l'un à l'autre sont prévus, entre lesquels l'au moins un moyen de commande (23) s'étend à l'intérieur du tube de commande (14).

5. Unité de cadre et de fourche selon l'une quelconque des revendications 1 à 4, **caractérisée en ce que** l'au moins un fourreau de protection est déformable au moins dans le sens périphérique et se compose de préférence au moins partiellement d'un matériau déformable élastiquement, en particulier en matière plastique ou un matériau en élastomère.

6. Unité de cadre et de fourche selon l'une quelconque des revendications 1 à 5, **caractérisée en ce que** l'au moins un fourreau de protection (25) se compose d'un tissu ou d'un tricot, qui est agencé comme une grille ou un filet entre la tige de fourche (17) et le moyen de commande (23) ou entre celui-ci et le tube de commande (14).

7. Unité de cadre et de fourche selon l'une quelconque des revendications 1 à 6, **caractérisée en ce que** l'au moins un fourreau de protection (25) est raccordé à son une extrémité en particulier supérieure fixement à l'anneau de centrage (20).

8. Unité de cadre et de fourche selon la revendication 7, **caractérisée en ce que** l'au moins un fourreau de protection (25) se compose de matière plastique et est moulé par injection fixement au niveau de l'anneau de centrage (20).

9. Unité de cadre et de fourche selon l'une quelconque des revendications 1 ou 3 à 8, **caractérisée en ce que** le fourreau de protection agencé entre le tube de commande (14) et le moyen de commande (23) est pourvu d'un prolongement dépassant à l'intérieur du tube de cadre (12).
